# EUROPEAN PATENT SPECIFICATION

(11) **EP 3 257 955 B1**
(45) Date of publication and mention of the grant of the patent: **07.09.2022**
(21) Application number: 16174105.3
(22) Date of filing: 13.06.2016
(51) Int. Cl.: D06P 3/32, D06P 1/50, C14C 3/12, C14C 9/02, C08L 1/28

(54) **PROCESS FOR PRETANNING OR RETANNING LEATHER USING CARBOXYMETHYLCELLULOSE AND ITS SALTS**
VERFAHREN FÜR DIE VORGERBUNG ODER NACHGERBUNG MITTES CARBOXYMETHYLCELLULOSE UND IHREN SALZEN
PROCÉDÉ DE PRÉTANNAGE OU DE RETANNAGE À BASE DE CARBOXYMÉTHYLCELLULOSE ET SES SELS

(43) Date of publication of application: 20.12.2017
(73) Proprietor: TFL Ledertechnik GmbH, 79618 Rheinfelden (DE)
(72) Inventor: Lang, Andreas, 82234 Wessling (DE); Kientz, Eric, 68480 Ferrette (FR); Fennen, Jens, 79639 Grenzach-Wyhlen (DE)
(74) Representative: Maucher Jenkins Patent- und Rechtsanwälte

(56) References cited:
- EP-A1- 0 831 153
- US-A1- 2015 111 025
- DATABASE WPI Week 201480 Thomson Scientific, London, GB; AN 2014-V82359 XP002759755, & CN 104 032 047 A (YANG F) 10 September 2014 (2014-09-10)
- DATABASE WPI Week 198736 Thomson Scientific, London, GB; AN 1987-254900 XP002759754, & JP S62 177287 A (DAICEL CHEM IND LTD) 4 August 1987 (1987-08-04)

## Description

The present invention refers to a process for pretanning or retanning leather using carboxymethyl cellulose and its salts (hereinafter abbreviated as CMC) as defined in claim 1 and to the use of an aqueous composition and/or a powder composition comprising at least one carboxymethyl cellulose and/or its salts (CMC) for tanning, pretanning or retanning leather as defined in claim 9. Particular invention embodiments are defined in the dependent claims, respectively.

For example sodium salt of carboxymethylcellulose CMC is prepared by activation of cellulose with an aqueous NaOH in the slurry of an organic solvent which reacts with the cellulose and monochloroacetic acid as an etherifying agent. The first step in the carboxy-methylation process is an alkalization where the hydroxyl groups of the cellulose chains are stimulated and altered into more reactive alkaline form. This is followed by an etherification to obtain CMC and a side reaction, which results in sodium glycolate ( T. Heinze et al. , Studies on the synthesis and characterization of carboxymethylcellulose. Angewandte Makromolekulare Chemie, 1999, 266, 37-45).

Carboxymethyl cellulose has many desirable applications such as coating, formation of emulsions and suspensions, water retention, detergent formulations. It is also used in many fields such as medicine, food, paper making, printing and dyeing (A.M. ADEL et al., Carboxymethylated Cellulose Hydrogel Sorption Behavior and Characterization. Nature and science 8, 2010).

US 2015/111025 A1 relates to a dispersion liquid of a carbon nanotube-containing composition which contains a carbon nanotube-containing composition, a dispersant which is carboxymethyl cellulose or a salt thereof with a weight-average molecular weight of 5,000 to 60,000 as determined by gel permeation chromatography, and an aqueous solvent. The dispersion liquid of a carbon nanotube-containing composition provided in US 2015/111025 A1 shows high dispersibility on a base while maintaining high dispersibility for the carbon nanotube-containing composition.

CN 104 032 047 A discloses aqueous compositions for the tanning of leather that comprise besides aluminium and chromium tanning agents also sodium carboxymethyl cellulose in the amount of 1 part by weight. Leather material is treated with said composition, washed, dyed, stuffed and, after subsequent steps, dried.

For tanning leather commonly acrylic polymers are used. Patents US 2205882 and US2205883 describe in detail the use of acrylic polymers as tanning or retanning systems.

EP 0024886 A1 refers a process for tanning heavy leather which comprises treating leather stock at a pH of from 4,5 to 5,5. with polymer containing units of acrylic and/or methacrylic acid and optionally, at least one of alkyl ester of acrylic acid, alkyl ester of methacrylic acid and partially sulfated unsaturated drying oil and subsequently treating the leather at a pH of from 1 to 3,3 with a mineral tanning agent.

US 4596581 is directed to a process using a water soluble polymer containing carboxyl-containing monomers like acrylic acid, methacrylic acid, and maleic acid and its anhydride.

Also US 4439201 refers to a process where a polymer containing carboxyl-containing monomers like acrylic acid are employed.

However, the use of anionic acrylic syntans has the drawback that they lead to more or less pronounced lightening of color or bleaching when leather is dyed. This effect is undesirable. In the context of this application bleaching includes the effect of the polymer used on the effect on the levelness or homogeneity and the intensity of the dye shade of the final tanned leather.

U.S. Patent No. 3 744 969 explain the use of amphoteric polymers to improve leather dye intensity. Synthetic amphoteric polymers are made by radical polymerization and are characterized by their isoelectric point (IEP) in the range 2,5-4,5. At PH above the IEP, the polymer is anionic and below the IEP cationic. In the IEP interval, the amphoteric polymer is electrostatically neutral and has a low water solubility. When using these polymers during retanning, a close control of the PH is needed to avoid polymer precipitation on the leather surface.

Patent EP0 831 153 A1 disclose a method to treat leather to obtain a retanned leather with improved dyeing characteristics. But polymers used in this patent application are also made by free radical polymerization of a monomer mixture comprising a carboxylic acid monomer and a vinyl ester monomer selected from the group consisting of vinyl acetate, vinyl propionate and their mixtures.

The other disadvantages of these acrylic polymer syntans are the use and manipulation of potential dangerous and toxic raw material like acrylic acid and their esters and the limited biodegradability of the resulting acrylic syntan (R.J.Larson et al., in .Biodegradation of acrylic acid polymers and oligomers by mixed microbial communities in activated sludge, J. Env. Polym. Degrad. 5(1), 41-48,1997) In order to reduce or avoid these effects, some patents or articles describe the use of biopolymers based on polysaccharides or protein hydrolysates during acrylic monomer polymerization. A solution of biopolymer is prepared and acrylic monomers like acrylic acid or methacrylic acid is polymerized by continuous addition at high temperature. Patent DE102007051378A describe such process and the use of biopolymers based on polysaccharide like alginate, carrageenan and starch and protein hydrolysate as tanning polymer for leather. However these products still contains high levels of acrylic monomer making questionable there biodegradability and toxicology.

Since it is desirable obtaining homogenous colored leather the technical problem underlying the present invention is the provision of a process for pretanning, tanning or retanning leather to improve the dyeing intensity or color strength and still retaining other desired aesthetic and physical properties of the pretanned, tanned or retanned leather like softness, fullness, milling break etc.

Another object of this invention is to avoid the use of acrylic syntan in leather production and their replacement with eco-friendly polymers with low toxicity obtained from renewable sources.

The technical problem underlying the present invention is solved by a process for tanning, pretanning or retanning leather comprising the steps of:
a) providing leather stock, tanned or pre-tanned leather
b) treating the leather or leather stock of step a) with an aqueous composition or with a powder composition comprising at least one carboxymethylcellulose or its salt (CMC), whereby the CMC has a weight average molecular weight MW of from 1000 to 500000 g/mol and a degree of substitution DS of from 0,3 to 3,0, and
c) drying.

Preferably, the CMC used in the present invention, is selected from the group consisting of carboxymethylcellulose, sodium carboxymethyl cellulose, potassium carboxymethyl cellulose, ammonium carboxymethyl cellulose and mixtures thereof. In a further preferred embodiment, the composition comprises a mixture of salts of carboxymethyl celluloses having different weight average molecular weights (Mw). For the present described invention, a sodium salt of carboxymethyl cellulose is preferred.

In step b) the at least one CMC has a weight average molecular weight (Mw) measured with size exclusion chromatography (SEC) of from 1000 g/mol to 500000 g/mol.

In a preferred embodiment in step b) the at least one CMC has a weight average molecular weight Mw of from 3000 to 100000 g/mol and even more preferred of from 5000 g/mol to 50000 g/mol.

In a further preferred embodiment, the composition comprises a mixture of CMC having different weight average molecular weights (Mw).

Solubility and rheological behavior like viscosity are important properties for the use of aqueous solutions of CMC as tanning system. These properties depend on the degree of substitution (DS) or number of carboxymethyl group CH3COOH per glucose monomer unit of the carboxymethylcellulose polymer. Theoretically DS can vary between 0 for pure cellulose to 3.0 carboxylic group per glucose monomer that is the theoretical maximum number.

As pure cellulose is not water soluble, at least one CMC has a degree of substitution of 0.3 to 3.0, (under a value of DS 0,3 the CMC polymer is not water soluble), preferably 0,5 to 2,0 and more preferably 0,65 to 1,5. Such CMC aqueous solutions at 1,0% w/w are characterized by PH values between 5,0 and 10,0.

Another important property for CMC solution is the distribution uniformity of carboxylic group along the polymer chain. High uniformity is preferable because CMC solutions exhibit lower thixotropic effect, leading to smooth flow even after long storage time.

Properties like weight average molecular weight (Mw), degree of substitution (DS), DS uniformity will have a strong influence on the solid content and viscosity of the CMC aqueous solution.

In step b) the at least CMC can be used as a fine powder or granules and can be added directly into the drum during the leather treatment. Care should be taken during addition in order to avoid aggregation into the water float, which is customary to the skilled artisan.

In step b) the CMC can preferably be used as an aqueous solution having a maximum viscosity measured with a Brookfield viscometer at 25°C of 100000 mPa.s, preferably 20000 mPa.s and more preferably 5000 mPa.s.

In step b) the aqueous solution preferably has a solid content measured with methods like Karl Fisher for moisture content, evaporation method using for example an HR73 halogen moisture analyzer of 1 % to 90%, preferably of 20% to 60% more preferably of 25% to 45%.

In a further preferred embodiment, the composition of step b) adds to the float in the drum from 0,5 to 30 weight-% of CMC based on the shaved weight of leather, preferably 1,0 to 10 weight-% and more preferably 2,0 to 6,0 weight-% of CMC.

Moreover, the composition of step b) can preferably be obtained by mixing CMC powder, granules or aqueous solutions having different weight average molecular weights (Mw) and different degree of substitution (DS).

The CMC being present in the composition of step b) has preferably a weight average molecular weight (Mw) of 5000 g/mol to 50000 g/mol and/or a degree of substitution (DS) of from 0,65 to 1,5.

The composition of step b) can preferably be obtained by using, within the definitions of claim 1, all type of CMC that has been chemically modified in order to obtain the described characteristics of molecular weight, degree of substitution, viscosity of the obtained solution and/or solids content.

Chemical modifications of CMC as far as falling within the definitions of claim 1 can preferably be obtained by oxidation, hydrolysis and cellulase enzymatic degradation methods. Cellulase is a group of several enzymes produced by fungi, bacteria and protozoans which catalyse the decomposition of cellulose in monosaccharides and oligosaccharides. Different kind of cellulase exist having different structures and mechanism of action. Synonyms, derivatives, and specific enzymes associated with the name "cellulase" include endo-1,4-beta-D-glucanase (beta-1,4-glucanase, beta-1,4-endoglucan hydrolase, endoglucanase D, 1,4-(1,3,1,4)-beta-D-glucan 4-glucanohydrolase), carboxymethyl cellulase (CMCase), avicelase, celludextrinase, cellulase A, cellulosin AP, alkali cellulase, cellulase A 3, 9.5 cellulase, and pancellase SS.

Best cellulase effect on carboxymethyl cellulose salt polymer degradation or depolymerization is obtained at a PH comprised between 4.0 and 6.0.

Preferably, the composition of step b) further comprises additives such as dyes, synthetic tanning agents, resin tanning agents, vegetable tanning agents, polymer tanning agents based on acrylate copolymers, natural polymers, softening retanning agents, fatliquoring agents and dyeing auxiliaries, as well as chromium, aluminium or zirconium compounds. Preferably, prior, simultaneously or subsequent to step b) the leather is treated with retanning agents and/or dyeing agents and/or fatliquoring agents.

In a further preferred embodiment, subsequent to step b) the leather is washed and treated with a fatliquoring agent. Preferably, prior to step b) the leather is treated with a retanning agent and/or dyeing agent.

Preferably, the composition used in step b) can also contain further additives, such as dyes, synthetic tanning agents, resin tanning agents, vegetable tanning agents, polymer tanning agents like acrylic copolymers and polyurethanes, natural polymers, softening retanning agents, fatliquoring agents and dyeing auxiliaries, as well as chromium, aluminium or zirconium compounds. The composition may also contain thickening or stabilizing agents, biocides, cutting agents and other components that are customary used as formulating agents. Preferably, the additives are polymers and thickening agents.

In step b), other auxiliaries may be used prior to, simultaneously or subsequent to applying the aforementioned composition. These auxiliaries may comprise synthans like condensation products based on aromatic compounds such as for example phenol, naphthalene, phenolsulfonic acid, naphtalenesulfonic acid and formaldehyde, vegetable tanning agents like Mimosa,Tara, Quebratcho and chestnut, polymer retanning agents like acrylic copolymers of acrylic acid and natural polymers. Other auxiliaries are fatliquoring agents available as commercial products based on animal fats like for example fish oil, lard oil or lanolin, vegetable fats like for example castor oil, coconut oil, olive oil or lecithine, synthetic fatliquors like for example chloro or sulfochloro paraffin and synthetic fatty acid esters and mineral oil. All these products are well known for a person skilled in the art.

Preferably, the composition of step b) further comprises other additives such as dyes, synthetic tanning agents, resin tanning agents, vegetable tanning agents, polymer tanning agents based on acrylate copolymers, natural polymers, softening retanning agents, fatliquoring agents and dyeing auxiliaries, as well as chromium, aluminum or zirconium compounds. The composition may also contain thickening and/or stabilizing agents, biocides, cutting agents and other components that are customary used as formulating agents.

Retanning and fatliquoring agents can be used from 0.5% up to 40% by weight of the composition. The retannage step can optionally be followed by dyeing and final fixation with for example formic acid. Among most used dyes are poly-azo dyes, acid dyes, sulfur dyes and metal complex dyes.

Retanning, fatliquoring and dyeing operation running time is from 0.5 h up to 24 h when the drum is let to run all the night at a temperature of 20 °C to 60 °C.

A further aspect of the present invention is leather obtained by the aforementioned process. Surprisingly, the leather obtained has a diminished bleaching compared with leather known in the art. The coloring of the leather is more homogeneous which is desirable.

Moreover, the present invention refers to the use of a composition comprising at least one CMC for tanning, pretanning or retanning leather, whereby the carboxymethyl cellulose and/or its salts (CMC) being present in the composition has a weight average molecular weight MW of from 1000 g/mol to 500000 g/mol and a degree of substitution DS of from 0,3 to 3,0. Said composition preferably is an aqueous composition and identical with the aqueous composition used in step b) and all preferred embodiments of said composition disclosed are explicitly incorporated.

The CMC being present in the composition has a weight average molecular weight Mw of from 1000 g/mol to 500000 g/mol.

In a further preferred embodiment, the composition comprises a mixture of CMC having different weight average molecular weights (Mw) falling within the definition in claim 1.

For reference purposes, the present disclosure describes a composition comprising at least one CMC having a weight average molecular weight Mw from 1000 to 500000 g/mol and
optionally at least one further additive being selected from the group comprising dyes, synthetic tanning agents, resin tanning agents, vegetable tanning agents, polymer tanning agents based on acrylate copolymers, natural polymers, softening retanning agents, fatliquoring agents, dyeing auxiliaries based on chromium, aluminium or zirconium compounds or mixtures thereof.

Preferably, at least one CMC has a weight average molecular weight Mw of from 5000 to 50000 g/mol.

In a further preferred embodiment, at least one CMC has a weight average molecular weight Mw of from 5000 g/mol to 50000 g/mol and/or the composition comprises a mixture of CMC having different weight average molecular weights M_{W}.

Preferably, the composition disclosed for reference purposes is an aqueous composition. In a further preferred embodiment disclosed for reference purposes the composition adds to the float from 0,5 to 30 weight-% of CMC based on the shaved weight of leather

Said composition preferably is an aqueous composition and identical with the aqueous composition used in step b) and all preferred embodiments of said composition disclosed are explicitly incorporated for step b) as defined in claim 1 or a dependent claim.

Surprisingly, the leather obtained has a diminished bleaching compared with leather known in the art. The color of the leather is more intense and homogeneous which is desirable and exemplified in the following examples.

When the molecular weight of CMC and /or composition mixture of CMC are carefully chosen overall critical leather properties such as softness, grain tightness, fullness and milling break can be adjusted and become similar to those of leathers made with acrylic retanning polymers.

Another advantage when using CMC is that they are obtained from renewable resource, cellulose being one of the most important and abundant polymer of glucose on earth. It is the main constituent of plants like cotton and linen. CMC degrades completely at low rates and has very low toxicity as describe in the article of C.G. Van Ginkel et al The biodegradability and nontoxicity of carboxymethyl cellulose (DS 0.7) and intermediates Environmental Toxicology and Chemistry Vol 15(3) March 1996, 270-274.

CMC are widely used in pharmaceutical,food and cosmetic industries as thickeners or emulsifers because if their low toxicity (A.Sannino et al, Biodegradable Cellulosebased Hydrogels: Design and Applications, Materials, 2009, 2, 353-373).

High viscosity sodium CMC salt solutions have Biological Oxygen Demand (BOD) after 5 days incubation of ca. 11.000 ppm for DS 0.8 and ca. 17.800 ppm for low viscosity solution with DS 0.8 (Nussinovitch, Hydrocolloid Applications: Gum Technology in the Food and Other Industries, pp114, Springer Science & Business Media, 2012).

### Examples

### Example 1

A 35% solids content sodium carboxymethylcellulose solution having 5.000 mPa.s viscosity has been used and added into the drum (Lamfix SO from Lamperti). Measured solid content with halogen HR73 halogen moisture analyzer 30 minutes at 105°C was found to be 34.5 %. The aqueous solution of CMC Lamfix SO had a PH of 7,4 for a degree of substitution of 0,65-0,75. Molecular weights measured using size exclusion chromatography were 6000 g/mol for the number average molecular weight (Mn) and 12800 g/mol for the weight average molecular weight (Mw).

### Example 2

A 25% solids content solution was made by dissolving 100,0 g of sodium carboxymethylcellulose polymer powder (Blanose 7ULC1 from Ashland) into a 1000 ml glass reactor equiped with thermometer, cooling column and teflon propeller agitator filled with 300,0 g of deionized water at a temperature of 30-35°C stirred at 200 rpm. After 2 hours, a homogeneous limpid brownish solution was obtained having a Brookfield viscosity at 25°C of 3.500 mPa.s using a spindle 2 at 6 rpm.

Measured solid content with halogen HR73 halogen moisture analyzer 30 minutes at 105°C was found to be 24,1%. The Solution had a PH of 5,5 for a degree of substitution of 0,65-0,90. Molecular weights measured using size exclusion chromatography were 17500 g/mol for Mn and 34000 g/mol for Mw.

### Example 3

A 20% solids content solution was made by dissolving 100,0 g of sodium carboxymethylcellulose polymer powder (Blanose 7L1C1 from Ashland) into a 1000 ml glass reactor equipped with thermometer, cooling column and teflon propeller agitator filled with 400,0 g of deionized water at a temperature of 30-35 °C stirred at 200 rpm.. After 2 hours, a homogeneous limpid brownish solution was obtained having a Brookfield viscosity at 25°C of 80000 mPa.s using a spindle 4 at 6 rpm. Measured solid content with halogen HR73 halogen moisture analyzer 30 minutes at 105°C was found to be 19,1%. The Solution had a pH of 5,5 for a degree of substitution of 0,65-0,90.

Molecular weights measured using size exclusion chromatography were 37800 g/mol for Mn and 70800 g/mol for Mw.

### Example 4

A 15% solids content solution was made by dissolving 65,0 g of sodium carboxymethylcellulose polymer (CARBOCELL MB 2C from Lamperti) into a 1000 ml glass reactor equipped with thermometer, cooling column and teflon propeller agitator filled with 450,0 g of deionized water at a temperature of 30-35 °C stirred at 200 rpm. After 2 hours, a homogeneous limpid yellowish solution was obtained having a Brookfield viscosity at 25°C of 30000 mPa.s using a spindle 4 at 6 rpm.

Measured solid content with halogen HR73 halogen moisture analyzer 30 min at 105°C was found to be 14,3%. The Solution had a PH of 7,1. Molecular weights measured using size exclusion chromatography were for 41000 g/mol for Mn and 101800 g/mol for Mw.

### Example 5

A 30% solids content sodium carboxymethyl cellulose solution having 1.975 mPa.s viscosity measured with a Brookfield viscometer at 25°C using spindle 2 at 6 rpm has been used and added into the drum (AMBERGUM 3021 from Ashland). Measured solid content with halogen HR73 halogen moisture analyzer 30 minutes at 105°C was found to be 30,7 %. The aqueous solution of sodium carboxymethyl cellulose AMBERGUM 3021 had a PH of 7,0 for a degree of substitution of 1,1-1,4. Molecular weights measured using size exclusion chromatography were 7700 g/mol for Mn and 27500 g/mol for Mw.

### Example 6

This example describes the enzymatic degradation of sodium carboxymethylcellulose Blanose 7ULC1 from Ashland.

75,0 g of Blanose 7ULC1 powder was added to a 1000 ml glass reactor equipped with thermometer, cooling column and teflon propeller agitator containing 225,0 g deionized water heated at 50°C and stirred at 200 rpm. Measured PH was 5,4. When the aqueous solution was homogeneous, 0,4 g of Cellulase enzym (Deta bright) was added and the mixture was stirred 24 h at 50°C. The solution was than heated up to 90°C for 1 h to stop enzyme activity.

Molecular weights measured using size exclusion chromatography were 2960 g/mol for Mn and 6500 g/mol for Mw.

The CMC solution had a solids content of 24,9% measured with halogen HR73 halogen moisture analyzer 30 minutes at 105°C and a PH of 4,9.

### Example 7

A 17% solids content solution was made by dissolving 55,0 g of sodium carboxymethylcellulose polymer (DENCELL T30 from DENKIM ) into a 1000 ml glass reactor equipped with thermometer, cooling column and teflon propeller agitator filled with 325,0 g of deionized water at a temperature of 30-35°C stirred at 200 rpm.

After 2 hours stirring, a homogeneous turbid brownish solution was obtained having a Brookfield viscosity at 25°C of 22000 mPa.s using a spindle 4 at 6 rpm.

Measured solid content with halogen HR73 halogen moisture analyzer 30 min at 105°C was found to be 16,5 %. The solution had a pH of 11,4 for a degree of substitution of 0 ,7-0,9. Molecular weights measured using size exclusion chromatography were respectively 63200 g/mol for Mn and 264300 g/mol for Mw.

### Example 8

Example 8 describe the enzymatic degradation of sodium carboxymethylcellulose solution of DENCELL T30 from DENKIM.

In a 300 ml glass becher, 161,1 g of DENCELL T30 powder was mixed with 1,0 g cellulase enzym Sammexia. The powder mixture was added slowly step by step in a 1000 ml glass reactor equipped with thermometer, cooling column and teflon propeller agitator filled with 355,0 g deionized water stirred at 200 rpm and heated at 50°C to avoid too strong aggregation. PH of solution was 11,0. 100,0 g of sulfuric acid 1N was added stepwise to adjust PH at 5,0. Mixture was stirred 15 h at a temperature of 50°C-55°C. The solution was than heated up to 90°C for 2 h to stop enzyme activity. An brownish aqueous CMC solution was obtained with a solid content measured with halogen lamp HR73 moisture analyzer 30 minutes at 105°C of 26,8% and a PH of 4,6. Final PH was adjusted with 3,5 g sodium hydroxide 50% to 5,9. Solution viscosity measured with Brookfield viscometer using spindle 2 at a rate of 6 rpm was found to be 1325 mPa.s.

Final molecular weights measured using size exclusion chromatography were 23500 g/mol for Mn and 48800 g/mol for Mw.

The CMC solution had a solids content of 24,9% measured with halogen HR73 halogen moisture analyzer 30 minutes at 105°C and a PH of 4,9.

### Comparative Example 1 (Acrylic polymer ACR 1)

Comparative Acrylic polymer ACR 1 is a commercially available anionic acrylic, known as MAGNOPAL SFT-F^{®}, supplied by TFL Ledertechnik AG. It has a solid content of 28%, a pH of 6,0 and molecular weights of respectively 23000 g/mol for Mn and 34000 g/mol for Mw. Typical Brookfield viscosity is 200 mPa.s.

### Comparative Example 2 (Acrylic polymer ACR 2)

Comparative Acrylic polymer ACR 2 is a commercially available anionic acrylic , known as MAGNOPAL RHN^{®}, supplied by TFL Ledertechnik AG. It has a solid content of 25%, a pH of 6,5 and molecular weights of respectively 25000 g/mol for Mn and 70000 g/mol for Mw. Typical Brookfield viscosity is 1000 mPa.s.

### Comparative example 3 ( no polymer solution comprised in the composition)

Comparative example 3 is conducted according the application example described below but without using any of the polymers used in examples 1-5 (CMC) or comparative examples 1 and 2 (acrylic polymer).

### Application examples

### Application example 1

Examples 1-5, comparative examples 1 and 2 and 3 have been tested according application example 1 described below.

### Material

All applications have been performed on Wet blue leather with a thickness of 1,1-1,2 mm.

Hides have been weighed. All raw material concentration is expressed in % based on hide shaved weight. For all examples, leather has been vacuum dried 2 min at 60 °C, hanged dry and staked.

### Retannage process

### Washing

The hide is put into a rotating steel drum filled up with 300 % water and heat up to 40°C. 0,3% formic acid 85% is then added and the drum. The pH of the liquor is 3,7. The aqueous solution is then removed from the drum after 20 min rotation.

### Neutralization

150 % water is added to the drum and heated to 40°C. The float is then neutralized respectively with 1,50% of sodium formiate for 20 min followed by addition of 0,5 % sodium bicarbonate for adjustment of PH at 5,0. The drum is let to rotate for 90 min.

The aqueous solution is then removed from the drum and the hide is washed with 200% water at 30°C for 10 min.

### Retannage/ Dyeing

100% water is added to the drum and heated to 30 °C. 4,0% based on CMC solid content of an aqueous solution of Example 1 -5 or retanning acrylic polymer comparative example 1 or 2 is added to the water and rotated for 20 min. PH is in the range 5,0-6,0 depending on the aqueous polymer solution initial PH value. The comparative example 3 without using the inventive examples has a pH of 4,9. Dyeing is than obtained by adding 3,0% of dye SELLA FAST Navy E from TFL Ledertechnik to the drum. The drum is let to rotate for 60 min. Then 100 % water is added and after 10 min rotation pH is adjusted at 3,7-3,9 with 1.5% formic acid 85% for 30 min.

Then fatliquoring is performed during 60 min by adding 150 % water at 50°C and respectively 4% of a mixture of natural and synthetic sulfated and sulfonated oil (CORIPOL UFB/W from TFL Ledertechnik) and 10% of a synthetic sulfonated oil (CORIPOL DX 902 from TFL Ledertechnik).

Final fixation is made using 2.0% formic acid 85% for 40 min. Final pH is 3,5.

### Washing

After these different steps, the drum is drained off and the hide is washed out with 200 % hot water (50 °C) for 10 min followed by a final washing with 200% water at 25°C.

### Drying

Leather were vacuum dried at 60°C for 2 min than hanged dry and staked.

Effect of CMC and acrylic polymers on the leather color intensity has been evaluated by measuring the color strength of wet end leathers using an *Xrite Color i5* spectrophotometer. % strength is the average value of 5 measurements obtained with a D65 daylight illuminant. Results in the table below are expressed as a ratio between % strength of sample / % strength of a reference sample. Reference sample has been chosen to be comparative example 1 acrylic polymer.

Other leather properties like color uniformity, softness, fullness, grain tightness and milling break were evaluated subjectively by three persons using an arbitrary scale. Table 1. give the effect of polymer type and molecular weight on color strength and other properties of the leathers.

**Table 1**

| **Example** | 1 | 2 | 3 | 4 | **compare ex 1** | **compare ex 2** | **compare ex 3** |
|---|---|---|---|---|---|---|---|
| **Mw g/mol** | 12800 | 34000 | 70800 | 101800 | 30000 | 70000 | - |
| **Color Strength ratio** | 2.1 | 2.0 | 2.4 | 2.7 | 1.0 | 1.0 | 4.9 |
| **Color Uniformity** | good | good | good | good | fair | fair | good |
| **Softness** | High | medium | medium | medium | high | high | very high |
| **Fullness** | good | good | good | fair | good | good | poor |

This application example 1 demonstrate the improvement in color strength and color uniformity of the leathers retanned with CMC polymers in comparison with standard acrylic polymers.

Table 1 shows overall critical leather properties like softness, fullness depend on CMC molecular weight. The lowest molecular weight 12 800 g/mol CMC with good color intensity gave leather properties as good as the acrylic retanning polymers.

### Application example 2

Application example 2 is the same as application example 1 except that dyeing agent SELLA FAST Navy E has been replaced by SELLA FAST Navy G.

In this application 4,0 % based on CMC solid content of Example 2, 5 and 6 have been compared to comparative example 1 as retanning polymer and example 3 without retanning polymer.

Table 2 below gives the effect of polymer type and molecular weight on color strength and other properties of the leathers.

**Table 2**

| **Example n°** | 5 | 2 | 6 | **Compare ex 1** | **Compare ex 3** |
|---|---|---|---|---|---|
| **Mw g/mol** | 27500 | 34000 | 6500 | 30000 | - |
| **Color Strength ratio** | 2.0 | 1.9 | 1.7 | 1.0 | 2.8 |
| **Color uniformity** | good | good | good | fair | good |
| **Softness** | medium | medium | high | high | very high |
| **Fullness** | good | good | very good | good | poor |
| **Tightness** | very good | very good | good | good | good |
| **Milling break** | good | good | good | fair | good |

This application example 2 show again the improvement in color strength and uniformity of leather retanned with CMC polymers compared to acrylic polymer of comparative example 1.

Overall critical leather properties such as fullness, tightness and milling break were found similar to comparative example 1 acrylic polymer. They were found better for the very low molecular weight CMC treated with cellulase enzyme.

### Application example 3

Application example 3 is the same as application example 1 except that dyeing agent SELLA FAST Navy E has been replaced by SELLA FAST Navy A.

In this application 4,0% based on solid content of Example 2, 7 and 8 have been compared to comparative example 1 as retanning polymer and example 3 without retanning polymer.

Table 3 below gives the effect of polymer type and molecular weight on color strength and other properties of the leathers.

**Table 3**

| **Example n°** | 5 | 7 | 8 | **Compare ex 1** | **Compare ex 3** |
|---|---|---|---|---|---|
| **Mw g/mol** | 27500 | 265000 | 48800 | 30000 | - |
| **Color Strength ratio** | 1.5 | 3.8 | 1.7 | 1.0 | 4.6 |
| **Color Uniformity** | good | good | good | fair | good |
| **Softness** | medium | low | medium | high | very high |
| **Fullness** | good | poor | good | good | poor |
| **Miling break** | good | medium | good | fair | fair |

In this application example 3 the color strength and uniformity of leather retanned with CMC polymer is much better compared to acrylic polymer of comparative example 1. Overall critical properties such as fullness, tightness, milling break were found to be close to acrylic polymer of comparative example 1. Very high molecular weight 265 000 g/mol CMC gave lower overall critical properties compared to acrylic polymer of comparative example 1.

## Claims

1. Process for tanning, pretanning or retanning leather comprising the steps of:
a) providing leather stock, tanned or pre-tanned leather
b) treating the leather or leather stock of step a) with an aqueous composition and/or a powder composition comprising at least one carboxymethyl cellulose and/or its salts (CMC), whereby the CMC has a weight average molecular weight MW of from 1000 to 500000 g/mol and a degree of substitution DS of from 0,3 to 3,0, and
c) drying.

2. The process according to claim 1, **characterized in that** in step b) the CMC has a weight average molecular weight MW of from 5000 to 50000 g/mol and a degree of substitution DS of from 0,65 to 1,5.

3. The process according to at least one of the claims 1 or 2, **characterized in that** the composition of step b) adds 0,5 to 30 weight-% of CMC.

4. The process according to at least one of the claims 1 to 3, **characterized in that** the composition of step b) comprises a mixture of CMC having different weight average molecular weights MW and different DS.

5. The process according to at least one of the claims 1 to 4, **characterized in that** the composition of step b) further comprises additives such as dyes, synthetic tanning agents, resin tanning agents, vegetable tanning agents, polymertanning agents based on acrylate copolymers, natural polymers, softening retanning agents, fatliquoring agents and dyeing auxiliaries, as well as chromium, aluminium or zirconium compounds.

6. The process according to at least one of the claims 1 to 5, **characterized in that** prior, simultaneously or subsequent to step b) the leather is treated with retanning agents and/or dyeing agents and/or fatliquoring agents.

7. The process according to at least one of the claims 1 to 6, **characterized in that** subsequent to step b) the leather is washed and treated with a fatliquoring agent.

8. The process according to at least one of the claims 1 to 7, **characterized in that** that prior to step b) the leather is treated with a retanning agent and/or dyeing agent.

9. Use of an aqueous composition and/or a powder composition comprising at least one carboxymethyl cellulose and/or its salts (CMC) for tanning, pretanning or retanning leather, whereby the carboxymethyl cellulose and/or its salts (CMC) being present in the composition has a weight average molecular weight MW of from 1000 g/mol to 500000 g/mol and a degree of substitution DS of from 0,3 to 3,0.

10. The use according to claim 9, whereby the composition comprises a mixture of CMC having different weight average molecular weights MW and different degree of substitution DS.

## Patentansprüche

1. Verfahren zum Gerben, Vorgerben oder Nachgerben von Leder, das die folgenden Schritte umfasst:
a) Bereitstellen eines Lederausgangsmaterials, von gegerbtem oder vorgegerbtem Leder
b) Behandeln des Leders oder des Lederausgangsmaterials von Schritt a) mit einer wässrigen Zusammensetzung und/oder einer Pulverzusammensetzung, die mindestens eine Carboxymethylcellulose und/oder deren Salze (CMC) umfasst, wobei die CMC ein Massenmittel der Molmasse MW von 1000 bis 500000 g/mol und einen Substitutionsgrad DS von 0,3 bis 3,0 aufweist, und
c) Trocknen.

2. Verfahren nach Anspruch 1, **dadurch gekennzeichnet, dass** in Schritt b) die CMC ein Massenmittel der Molmasse MW von 5000 bis 50000 g/mol und einen Substitutionsgrad DS von 0,65 bis 1,5 aufweist.

3. Verfahren nach mindestens einem der Ansprüche 1 oder 2, **dadurch gekennzeichnet, dass** durch die Zusammensetzung von Schritt b) 0,5 bis 30 Gew.-% CMC hinzugefügt werden.

4. Verfahren nach mindestens einem der Ansprüche 1 bis 3, **dadurch gekennzeichnet, dass** die Zusammensetzung von Schritt b) ein Gemisch von CMC mit verschiedenen Massenmitteln der Molmasse MW und verschiedenen DS umfasst.

5. Verfahren nach mindestens einem der Ansprüche 1 bis 4, **dadurch gekennzeichnet, dass** die Zusammensetzung von Schritt b) weiterhin Additive wie Farbstoffe, synthetische Gerbstoffe, Harzgerbstoffe, pflanzliche Gerbstoffe, auf Acrylat-Copolymeren basierende Polymergerbstoffe, natürliche Polymere, erweichende Nachgerbstoffe, Fettungsmittel und Färbehilfsmittel sowie Chrom-, Aluminium- oder Zirconiumverbindungen umfasst.

6. Verfahren nach mindestens einem der Ansprüche 1 bis 5, **dadurch gekennzeichnet, dass** vor, gleichzeitig mit oder nach Schritt b) das Leder mit Nachgerbstoffen und/oder Färbemitteln und/oder Fettungsmitteln behandelt wird.

7. Verfahren nach mindestens einem der Ansprüche 1 bis 6, **dadurch gekennzeichnet, dass** nach Schritt b) das Leder gewaschen und mit einem Fettungsmittel behandelt wird.

8. Verfahren nach mindestens einem der Ansprüche 1 bis 7, **dadurch gekennzeichnet, dass** vor Schritt b) das Leder mit einem Nachgerbstoff und/oder Färbemittel behandelt wird.

9. Verwendung einer wässrigen Zusammensetzung und/oder einer Pulverzusammensetzung, die mindestens eine Carboxymethylcellulose und/oder deren Salze (CMC) umfasst, zum Gerben, Vorgerben oder Nachgerben von Leder, wobei die Carboxymethylcellulose und/oder deren Salze (CMC) in der Zusammensetzung mit einem Massenmittel der Molmasse MW von 1000 g/mol bis 500000 g/mol und einem Substitutionsgrad DS von 0,3 bis 3,0 vorhanden sind.

10. Verwendung nach Anspruch 9, wobei die Zusammensetzung ein Gemisch von CMCs mit verschiedenen Massenmitteln der Molmasse MW und verschiedenen Substitutionsgraden DS umfasst.

## Revendications

1. Procédé de tannage, de prétannage ou de retannage de cuir comprenant les étapes consistant à :
a) fournir un stock de cuir, du cuir tanné ou pré-tanné
b) traiter le cuir ou stock de cuir de l'étape a) à l'aide d'une composition aqueuse et/ou d'une composition en poudre comprenant au moins une carboxyméthylcellulose et/ou ses sels (CMC), dans lequel la CMC présente un poids moléculaire MW moyen en poids de 1 000 à 500 000 g/mol et un degré de substitution DS de 0,3 à 3,0, et
c) sécher.

2. Procédé selon la revendication 1, **caractérisé en ce que**, à l'étape b), la CMC a un poids moléculaire MW moyen en poids de 5 000 à 50 000 g/mol et un degré de substitution DS de 0,65 à 1,5.

3. Procédé selon au moins l'une des revendications 1 ou 2,**caractérisé en ce que** la composition de l'étape b) ajoute 0,5 à 30 % en poids de CMC.

4. Procédé selon au moins l'une des revendications 1 à 3, **caractérisé en ce que** la composition de l'étape b) comprend un mélange de CMC ayant des poids moléculaires MW moyens en poids différents et un DS différent.

5. Procédé selon au moins l'une des revendications 1 à 4, **caractérisé en ce que** la composition de l'étape b) comprend en outre des additifs tels que des colorants, des agents de tannage synthétiques, des agents de tannage résineux, des agents de tannage végétaux, des agents de tannage polymères à base de copolymères d'acrylate, des polymères naturels, des agents de retannage assouplissants, des agents de graissage et des auxiliaires de coloration, ainsi que des composés de chrome, d'aluminium ou de zirconium.

6. Procédé selon au moins l'une des revendications 1 à 5, **caractérisé en ce que** préalablement, simultanément ou postérieurement à l'étape b), le cuir est traité à l'aide d'agents de retannage et/ou d'agents de coloration et/ou d'agents de graissage.

7. Procédé selon au moins l'une des revendications 1 à 6, **caractérisé en ce que** postérieurement à l'étape b), le cuir est lavé et traité à l'aide d'un agent de graissage.

8. Procédé selon au moins l'une des revendications 1 à 7, **caractérisé en ce que** préalablement à l'étape b), le cuir est traité à l'aide d'un agent de retannage et/ou d'un agent de coloration.

9. Utilisation d'une composition aqueuse et/ou d'une composition en poudre comprenant au moins une carboxyméthylcellulose et/ou ses sels (CMC) pour le tannage, le prétannage ou le retannage de cuir, dans laquelle la carboxyméthylcellulose et/ou ses sels (CMC) qui sont présents dans la composition présente un poids moléculaire MW moyen en poids de 1 000 g/mol à 500 000 g/mol et un degré de substitution DS de 0,3 à 3,0.

10. Utilisation selon la revendication 9, dans laquelle la composition comprend un mélange de CMC ayant des poids moléculaires MW moyens en poids différents et un degré de substitution DS différent.
